# EUROPÄISCHE PATENTSCHRIFT

(11) **EP 2 808 109 B1**
(45) Veröffentlichungstag und Bekanntmachung des Hinweises auf die Patenterteilung: **02.05.2018**
(21) Anmeldenummer: 13169472.1
(22) Anmeldetag: 28.05.2013
(51) Int. Cl.: B23B 31/30, B23B 31/28, F15B 7/00, F15B 15/18

(54) **Spannsystem**
Clamping system
Système de serrage

(43) Veröffentlichungstag der Anmeldung: 03.12.2014
(73) Patentinhaber: HAWE Hydraulik SE, 85609 Aschheim (DE)
(72) Erfinder: Neumair, Georg, 85402 Thalhausen (DE); Polke, Matthias, 83301 Traunreut (DE)
(74) Vertreter: Grosse Schumacher Knauer von Hirschhausen

(56) Entgegenhaltungen:
- EP-A2- 0 234 230
- US-A- 4 080 716
- US-B2- 7 610 754

## Beschreibung

Die Erfindung betrifft ein Spannsystem gemäß Oberbegriff des Anspruchs 1.

In einem aus EP 0234230 A2, Fig. 4, bekannten hydraulischen Spannsystem einer Werkzeugmaschine werden in einem drehangetriebenen Futter radial verstellbare Spannbacken über eine in das rotierende Futtergehäuse eingegliederte Zahnradpumpe betätigt. Die Zahnradpumpe wird über Riementriebe und durch Relativdrehungen zwischen dem Stator und dem Rotor eines insgesamt drehbar gelagerten, externen Elektromotors in der einen oder der anderen Drehrichtung angetrieben und verstellt einen Kolben in einem Zylinder. Der Kolben verstellt seinerseits die Spannbacken.

Auch aus einem Motorpumpenaggregat versorgte hydraulische Spannsysteme sind in vielfältigen Ausführungen in Werkzeugmaschinen üblich und bekannt. Der Spannzylinder wird üblicherweise aus einer Lösestellung z.B. über einen Leergang in eine Spannstellung gesteuert, in der ein Spannwerkzeug mit bestimmtem Druck beaufschlagt und gehalten wird. Der Leergang sollte möglichst rasch durchfahren werden, um kurze Spannzyklen zu erzielen, während der maximale Spanndruck feinfühlig eingestellt und gehalten werden muss. Z.B. hat der Spannzylinder in einer Drehmaschine eine Drehdurchführung, die bauartbedingt mehr oder weniger Leckage entstehen lässt, die getrennt zum Motorpumpenaggregat zurückzuführen ist. Andere Spannzylinder arbeiten zumindest weitestgehend ohne Leckage. Zur Richtungssteuerung des Spannzylinders werden durch Magneten betätigte Schaltventile zwischen dem Motorpumpenaggregat und dem Spannzylinder vorgesehen, die das Spannsystem aufwändig gestalten und erheblichen baulichen Mehraufwand sowie hohe Kosten bedingen. Magnetbetätigte Schaltventile können Ursache für Betriebsstörungen sein und müssen häufig in ihrer Funktion überwacht werden.

Von Interesse sind ferner US 7610754 B2 und US 4080716 A.

Der Erfindung liegt die Aufgabe zugrunde, ein Spannsystem der eingangs genannten Art anzugeben, das baulich einfach, kostengünstig und störungsunanfällig ist.

Die gestellte Aufgabe wird mit den Merkmalen des Anspruches 1 gelöst.

Durch den Wegfall jeglicher Schaltventile, d.h. magnetbetätigter Wegeventile in Schieber- oder Sitzbauweise, werden nicht nur erhebliche Kosten eingespart, sondern lässt sich auch die Steuerung vereinfachen und ist die Betriebssicherheit höher. Die Richtungssteuerung des Spannzylinders erfolgt nur durch Drehrichtungsumkehr des Elektromotors und der zumindest einen Pumpe, die in beiden Drehrichtungen fördert. Alternativ könnten dem Elektromotor mehr als eine Pumpe zugeordnet sein, von denen jeweils eine in einer Drehrichtung des Elektromotors fördert. Zweckmäßig läuft das Motorpumpenaggregat im Dauerbetrieb, weil solche Spannsysteme üblicherweise leckagebehaftet sind und zumindest in der Spannstellung des Spannzylinders sichergestellt sein muss, dass sich der Spanndruck nicht aufgrund von Leckage im System vermindert.

Der Elektromotor ist ein dreiphasiger Asynchronmotor oder ein Synchronmotor, dem steuerungsseitig ein Drehgeber und zur Drehzahlregelung ein Frequenzumrichter zugeordnet sind. Über die Drehzahlregelung lässt sich die Geschwindigkeit bei der Richtungssteuerung des Spannzylinders entsprechend variieren. Über den Drehgeber ist eine permanente Rückmeldung der Drehzahl des Elektromotors bzw. der Pumpe vorhanden, so dass eine übergeordnete Steuerung gegebenenfalls mit Sollwerten regeln kann. Zur Erhöhung der Betriebssicherheit ist es ferner zweckmäßig, wenn Druck- und/oder Positionssensoren des Spannzylinders eingesetzt werden, die, vorzugsweise, mit einer Steuerung des Motorpumpenaggregats und/oder Spannsystems verbunden sind. Über zumindest einen Drucksensor kann eine Meldung über das Erreichen und Halten des Spanndruckes in der Steuerung verarbeitet werden. Ähnlich kann wenigstens ein Positionssensor eine zusätzliche Information zur Position des Spannzylinders an die Steuerung liefern, mit der eine saubere Regelung durchführbar ist.

In dem Spannsystem ist der Drehzahlregelung durch wenigstens einen Frequenzumrichter zur Geschwindigkeitssteuerung des Spannzylinders zumindest zeitweise eine dann vorrangige Druckregelung überlagerbar. Die Druckregelung sichert den gewünschten Spanndruck und Spanndruckaufbau, während die Drehzahlregelung beispielsweise dazu benutzt werden kann, den Spannzylinder über seinen Leerhub bis zur oder nahe an die Spannstellung zu steuern.

In einer baulich einfachen und funktionssicheren Ausführungsform ist die Pumpe eine Zahnradpumpe, die in beiden Drehrichtungen zu jeweils einem von zwei getrennten Förderauslässen fördert, während der dann jeweils nicht aktive Förderauslass als Saugeinlass dient, über den beispielsweise das von der nicht beaufschlagten Beaufschlagungsseite des Spannzylinders ausgeschobene Hydraulikmedium angesaugt wird (z.B. weitgehend geschlossener Kreislauf). Die Zahnradpumpe istüber eine Vielzahnkupplung mit einer Elektromotor-Antriebswelle gekuppelt. Die Vielzahnkupplung ist weitgehend spielfrei und bietet montagetechnische Vorteile.

In einer zweckmäßigen Ausführungsform ist der Drehgeber im Reservoirgehäuse innenseitig installiert und auf eine Elektromotor-Antriebswelle ausgerichtet, um die Drehzahl jeweils direkt abzugreifen.

Der Drehgeber kann direkt oder über eine Kupplung an die Welle angebaut sein. Alternativ kann der Drehgeber in ein Drehsensorlager der Welle eingegliedert sein.

Für den Fall, dass der Spannzylinder volumenbezogen gleiche Beaufschlagungsseiten aufweist, kann das Spannsystem weitgehend im geschlossenen Kreislauf betrieben werden, weil ausgeschobenes Hydraulikmedium wieder von der Pumpe angesaugt und auf die andere Beaufschlagungsseite gebracht wird. Da Spannsysteme oft leckagebehaftet sind, kann aus dem Reservoir nachgesaugt werden, um Leckage auszugleichen.

Bei einer zweckmäßigen Ausführungsform weist der Spannzylinder, wie in Werkzeugmaschinen häufig üblich, zwei volumenbezogen unterschiedliche bzw. unterschiedlich große Beaufschlagungsseiten auf. Da dann pro Zeiteinheit die eingebrachten und ausgeschobenen Mengen differieren, wird zweckmäßig in zumindest einer Verbindungsleitung von einem Förderauslass der Pumpe zu einer Beaufschlagungsseite, vorzugsweise sogar in beiden Verbindungsleitungen, ein zumindest förderdruckabhängig gegen Federkraft ansprechendes 3/2-Wegeventil angeordnet, das mit einer Rücklaufleitung zum Reservoir verbunden ist. Über dieses Wegeventil bzw. die beiden Wegeventile werden Mengenunterschiede kompensiert bzw. ermöglicht, die aus der Bauweise des Spannzylinders resultieren. Diese Wegeventile sind nicht magnetbetätigt, sondern sprechen im Wesentlichen nur auf den Förderdruck an, wobei sie durch die Federkraft normalerweise in einer Schaltstellung gehalten sind, in der die jeweilige Beaufschlagungsseite mit dem Rücklauf zum Reservoir verbunden ist, und erst bei Erreichen eines bestimmten Förderdruckes der Pumpe die Pumpe mit der Beaufschlagungsseite verbinden und zur Rücklaufleitung sperren.

Jedes 3/2-Wegeventil ist zweckmäßig in einem am Reservoirgehäuse des Motorpumpenaggregats installierten Anschlussblock enthalten. Dies bedeutet, dass vom Motorpumpenaggregat die Verbindungsleitungen direkt und ohne weitere Komponenten, gegebenenfalls abgesehen von Manometern, zu den Beaufschlagungsseiten des Spannzylinders verlaufen.

Um volumenbezogenen Unterschieden zwischen den Beaufschlagungsseiten Rechnung tragen zu können, ist es zweckmäßig, dass zwischen jedem Förderauslass der Pumpe und dem Reservoir ein zum Reservoir sperrendes Rückschlagventil angeordnet ist, vorzugsweise ein federbelastetes Nachsaug-Rückschlagventil, über welches die Pumpe ansaugen kann. Wenn die Pumpe zwei Förderauslässe und damit zwei Saugeinlässe besitzt, sind zweckmäßig natürlich zwei solcher Rückschlagventile vorgesehen.

Der Spannzylinder ist aus einer Lösestellung über einen Leergang in eine Spannstellung steuerbar. Über die Pumpe und den Elektromotor wird der Leergang beispielsweise mit einer reinen Drehzahlregelung gesteuert, so dass der Spannzylinder den Leergang möglichst schnell überwindet und zur Spannstellung kommt. Zumindest ab einem Übergang vom Leergang in die Spannstellung wird der Drehzahlregelung die Druckregelung überlagert, so dass der Spanndruck korrekt eingestellt und nachfolgend gehalten wird. Der Spanndruck kann beispielsweise durch der Pumpe zugeordnete Druckbegrenzungsventile eingestellt sein. In einem konkreten Ausführungsfall kann die Fördermenge der Pumpe zwischen etwa 8 und 10 l/min variieren (bei 50 Hz oder 60 Hz), und kann ein maximaler Druck von etwa 70 bis 80 bar erzeugt werden, wobei die Drehzahl des Elektromotors bzw. der Pumpe zwischen etwa 700 und 2500 1/min variiert wird.

Ausführungsformen des Erfindungsgegenstandes werden anhand der Zeichnungen erläutert. Es zeigen:
- Fig. 1: ein Blockschaltbild eines Spannsystems einer Werkzeugmaschine, und
- Fig. 2: einen Teillängsschnitt eines Motorpumpenaggregats als Komponente des Spannsystems von Fig. 1.

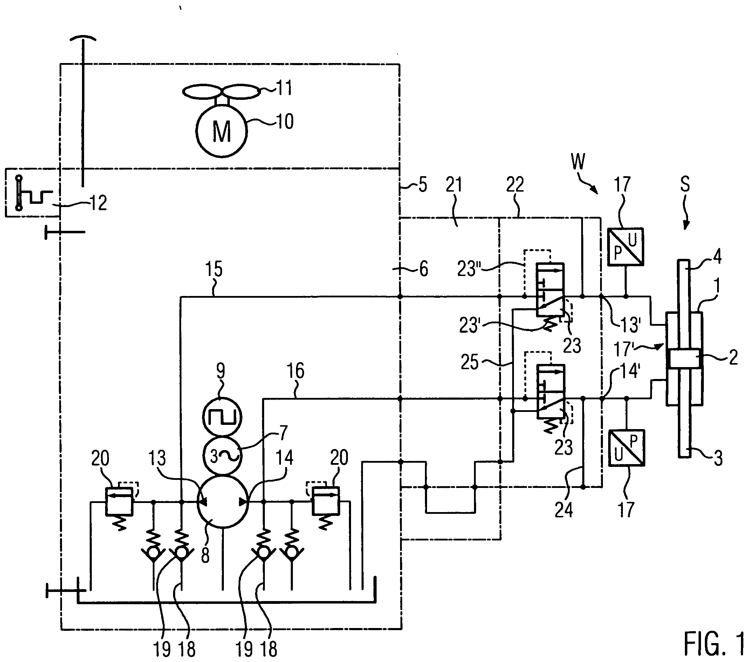

Fig. 1 verdeutlicht als Blockschaltbild ein Spannsystem S einer Werkzeugmaschine W, beispielsweise einer Drehmaschine, wobei Hauptbestandteil des Spannsystems S ein doppelseitig beaufschlagbarer Spannzylinder 1 mit einem Kolben 2 und wenigstens einer Kolbenstange 3 oder 4, oder zwei Kolbenstangen 3, 4 ist, der einen nicht gezeigten Werkstück- oder Werkzeugspanner betätigt. Der Spannzylinder 1 ist beispielsweise zwischen einer Lösestellung über einen Leergang bis in eine Spannstellung und zurück richtungs- und/oder geschwindigkeitssteuerbar, wobei in der Spannstellung ein vorbestimmter Spanndruck eingestellt und gehalten werden muss.

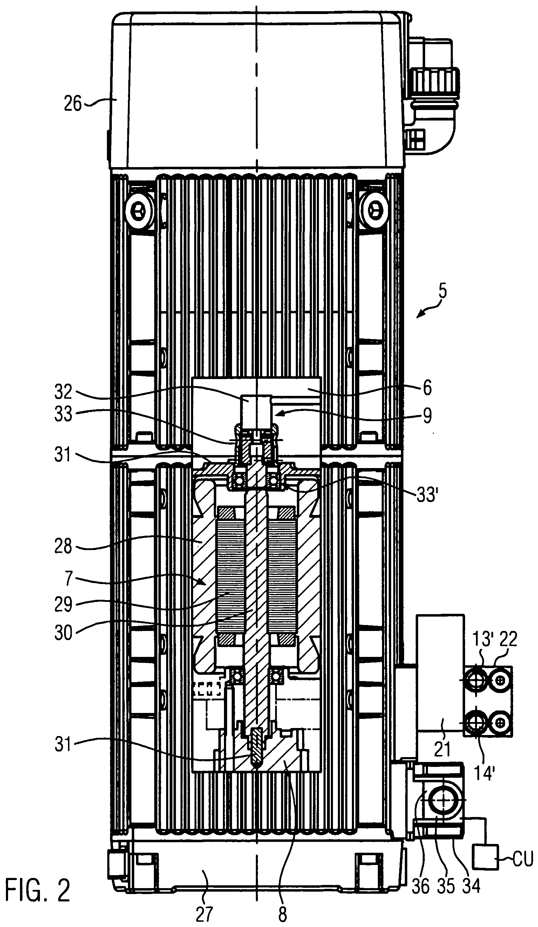

Die Richtungs- und Geschwindigkeitssteuerung des Spannzylinders 1 erfolgt über ein Motorpumpenaggregat 5 mit einem Reservoirgehäuse 6, in welchem im Inneren Hydraulikmedium enthalten und ein Elektromotor 7 (z.B. Unterölmotor) sowie wenigstens eine Pumpe 8 eingebaut sind. Dem Elektromotor 7 ist ein Drehgeber 9 zugeordnet, der mit einer nicht dargestellten Steuerung, beispielsweise des Motorpumpenaggregats 5 oder des Spannsystems S, verbunden ist. Der Elektromotor 7 ist drehrichtungsumkehrbar und beispielsweise ein dreiphasiger Asynchron- oder Synchronmotor, beispielsweise mit einer Leistung zwischen etwa 1,0 kW bis 1,2 kW. Zur Drehzahlregelung ist ein Frequenzumrichter 35 (Fig. 2) vorgesehen. Die Pumpe 8 ist, wie erwähnt, beispielsweise eine Zahnradpumpe mit einer Förderleistung zwischen etwa 8 bis 10 l/min bei 1500 1/min. und kann einen Maximaldruck von z.B. 80 bar erzeugen, wobei ein nutzbarer Drehzahlbereich zwischen etwa 700 und 2500 1/min liegen kann. Die maximale Drehzahl kann bei speziellen Zahnradpumpen auch größer als 3500 1/min sein, und die minimale Drehzahl kann auch nur 200 1/min betragen, oder kurzzeitig sogar Null sein.

Auf dem Reservoirgehäuse 6 kann ein Lüfterrad 11, beispielsweise angetrieben durch einen Motor 10, angeordnet sein, der gegebenenfalls unter Verwendung eines Thermostatschalters 12 gesteuert wird.

In der gezeigten Ausführungsform des Motorpumpenaggregats 5 ist die Pumpe 8 beispielsweise eine Zahnradpumpe, die in beiden Drehrichtungen fördern kann und im Betrieb des Elektromotors 7 über einen Förderauslass 13 oder 14 fördert, hingegen über den jeweils anderen Förderauslass 14 oder 13 ansaugt. Die Förderauslässe 13, 14 sind über Verbindungsleitungen 15, 16 mit den Beaufschlagungsseiten des Spannzylinders verbunden. An die Verbindungsleitungen 15, 16 sind Drucksensoren 17 angeschlossen. Ferner kann beim Spannzylinder 1 ein Positionssensor 17' vorgesehen sein.

Jedem Förderauslass 13, 14 der Pumpe 8 kann eine Saugleitung 18 zugeordnet sein, in der ein in Ansaugrichtung öffnendes Rückschlagventil 19 angeordnet ist, vorzugsweise ein federbelastetes Nachsaug-Rückschlagventil 19. Ferner sind den Förderauslässen 13, 14 Druckbegrenzungsventile 20 zugeordnet, die beispielsweise auf den maximalen Spanndruck eingestellt sind, beispielsweise 70 oder 80 bar.

In der in Fig. 1 gezeigten Ausführungsform ist an das Reservoirgehäuse 6 außenseitig eine Abstandsplatte 21 angeschraubt, in der die Verbindungsleitungen 15, 16 verlaufen, und die als Option ein Anschlussgehäuse 22 trägt, in welchem in jeder Verbindungsleitung 15, 16 ein 3/2-Wegeventil 23 angeordnet ist, das durch eine Feder 23' in einer Schaltstellung gehalten wird, in welcher die jeweilige Beaufschlagungsseite mit einer Rücklaufleitung 25 zum Reservoirgehäuse 6 verbunden und die Verbindungsleitung 15 oder 16 abgesperrt ist, und das zumindest förderdruckabhängig über eine Vorsteuerleitung 23" in eine Durchgangsstellung umstellbar ist, in der die Verbindungsleitung 15 oder 16 durchgängig ist, hingegen die Verbindung von der Beaufschlagungsseite zur Rücklaufleitung 25 blockiert wird. An Stichleitungen 24 können Manometer angeschlossen werden. Der Anschlussblock 22 hat mit den Förderauslässen 13, 14 verbundene Anschlüsse 13', 14' für zum Spannzylinder 1 verlaufende Abschnitte der Verbindungsleitungen 15, 16.

Der Anschlussblock 22 mit den Ventilen 23 könnte weggelassen werden, falls beide Beaufschlagungsseiten des Spannzylinders 1 volumenbezogen gleich sind. Er ist jedoch auch zweckmäßig, um Leckage zu kompensieren.

Da jedoch Spannzylinder häufig volumenbezogen unterschiedliche Beaufschlagungsseiten aufweisen, sind die 3/2-Wegeventile 23 zweckmäßig (zumindest eines in einer Verbindungsleitung), um mit den unterschiedlichen Strömungsraten und gegebenenfalls mit Leckage zurechtzukommen.

### Funktion:

Ist der Elektromotor 7 abgeschaltet, dann ist der Spannzylinder 1 in einer Schwimmstellung. Sind die 3/2-Wegeventile 23 vorgesehen, sind beide Beaufschlagungsseiten druckentlastet (wie in Fig. 1 dargestellt).

Um den Spannzylinder 1, beispielsweise aus der Lösestellung in Richtung zur Spannstellung zu steuern, läuft der Elektromotor 7 in einer Drehrichtung, in der die Pumpe 8 Druckmittel in die entsprechende Beaufschlagungsseite des Kolbens 2 des Spannzylinders 1 einspeist, während gleichzeitig Druckmittel aus der anderen Beaufschlagungsseite ausgeschoben wird. Sind die Ventile 23 vorgesehen, dann fließt das ausgeschobene Hydraulikmedium über die Rücklaufleitung 25 ab. Beim Durchfahren des Leerhubes wird über den Frequenzumrichter 35 mit einer Drehzahlregelung gearbeitet, um den Spannzylinder möglichst schnell zur Spannstellung zu bringen. Z.B. beim Übergang vom Leergang in die Spannstellung wird dann der Drehzahlregelung eine Druckregelung überlagert, um den Spanndruck wie gewünscht einzustellen und zu halten. Dies kann durch eine übergeordnete Steuerung ausgeführt werden, wobei zumindest bei der Drehzahlregelung der Drehgeber 9 notwendige Regelinformationen liefert, bei der Druckregelung hingegen auch Informationen der Drucksensoren 17 und/oder wenigstens eines Positionssensors 17' verarbeitbar sind. Der maximale Spanndruck kann beispielsweise über das ansprechende Druckbegrenzungsventil 20 gehalten werden. Um jedoch ständige Verluste und eine zusätzliche Wärmeentwicklung zu vermeiden, ist es zweckmäßig, die Druckregelung so vorzunehmen, dass der maximale regelbare Druck z.B. mindestens etwa 10 % unter dem einstellbaren Ansprechdruck des jeweiligen Druckbegrenzungsventils 20 liegt. Dabei kann der Elektromotor 7 weiterlaufen.

Das Motorpumpenaggregat 5 kann im Übrigen, danke des Lüfterrades 11 mit seinem Motor 10 durchaus im Dauerbetrieb eingesetzt werden, obwohl dies unter Umständen nicht immer notwendig ist.

Um den Spannzylinder 1 aus der Spannstellung wieder in die Lösestellung umzustellen, wird die Drehrichtung des Elektromotors 7 umgekehrt, so dass die Pumpe 8 in die andere Verbindungsleitung 15 oder 16 fördert, bis die Lösestellung erreicht ist, wobei hier gegebenenfalls mit einer Drehzahlregelung gearbeitet wird, um die Lösestellung möglichst schnell einzusteuern. In jedem Fall kann der wenigstens eine Positionssensor 17' hier brauchbare Regelinformationen liefern und/oder auch der jeweilige Drucksensor 17. Auf diese Weise kommt das Spannsystem ohne magnetbetätigte Schaltventile aus, und lässt sich trotzdem der Spannzylinder 1 rasch und feinfühlig steuern. Eventuelle Leckagen im Spannsystem werden u.a. über die Rückschlagventile 19 ausgeglichen.

Fig. 2 verdeutlicht in einem Teilschnitt eine Ausführungsform eines Motorpumpenaggregats 5, wie es in dem Spannsystem S von Fig. 1 verwendbar ist. Das Reservoirgehäuse 6 ist beispielsweise ein Leichtmetall-Strangpressrohrabschnitt, der an beiden Enden durch Gehäusedeckel 26, 27 verschlossen ist, wobei der Gehäusedeckel 26 eine geschlitzte Haube aufweisen kann, unter der das Lüfterrad 11 mit seinem Motor 10 untergebracht ist. Der Elektromotor 7 ist beispielsweise ein offener Unterölmotor mit einem in das Reservoirgehäuse 6 eingepressten Stator 28 und einem eine Welle 30 treibenden Rotor 29. Die Welle 30 ist in Lagerschilden drehgelagert, wobei z.B. ein Lagerschild 31 den Drehgeber 9 trägt, von dem ein Gehäuse 32 gezeigt ist, das über ein Kabel mit einer Steuerung verbunden ist. Dem Drehgeber 9 ist entweder direkt oder beispielsweise über eine Wendelkupplung 33 an die Welle 30 angebaut. Alternativ könnte der Drehgeber 9 in ein Sensorlager 33' der Welle 30, z.B. im oberen Lagerschild 31, eingegliedert sein. Das andere Ende der Welle 30 treibt beispielsweise über eine Vielzahnkupplung 31 die an einem Flansch montierte Zahnradpumpe 8, deren Förderauslässe 13, 14 (in Fig. 2 nicht gezeigt) mit Anschlüssen 13', 14' in dem außen über die Abstandsplatte 21 installierten Anschlussblock 22 für die Verbindungsleitungen 15, 16 verbunden sind. Am unteren Ende des Reservoirgehäuses 6 ist an einem Sockel ein Klemmengehäuse 34 montiert, in welchem ein Frequenzumrichter 35 für den Elektromotor 7 und gegebenenfalls eine Steuerung 36 des Motorpumpenaggregats enthalten sein können. Allerdings ist auch eine Verbindung mit einer übergeordneten Steuerung CU, beispielsweise des Spannsystems S, denkbar, die die Steuerung des Spannzylinders 1 und damit gekoppelt des Motorpumpenaggregats 5 ausführt. Der Frequenzumrichter 36 dient u.a. zur Drehzahlregelung des Elektromotors, und gegebenenfalls auch zur Drehrichtungsumkehr des Elektromotors 7. Der Frequenzumrichter 35 könnte direkt im Elektromotor 7 oder in oder bei der Steuerung CU angeordnet sein.

Alternativ könnten dem drehrichtungsumkehrbaren Elektromotor 7 zwei oder mehr Pumpen anderer Bauarten zugeordnet sein, von denen jeweils zumindest eine in einer Drehrichtung des Elektromotors 7 fördert.

## Patentansprüche

1. Spannsystem (S) einer Werkzeugmaschine (W), mit wenigstens einem Spannzylinder (1), der aus einem mit zumindest einer Beaufschlagungsseite des Spannzylinders verbundenen, elektrisch betriebenen Motorpumpenaggregat (5) richtungssteuerbar ist, das in einem Reservoirgehäuse (6) wenigstens eine von einem Elektromotor (7) angetriebene Pumpe (8) enthält, **dadurch gekennzeichnet, dass** der Spannzylinder (1) ohne Schaltventile durch Drehrichtungsumkehr des drehrichtungsumkehrbar ausgebildeten Elektromotors (7) über die in beiden Drehrichtungen fördernde Pumpe (8) richtungssteuerbar ist, dass der Elektromotor (7) ein dreiphasiger Asynchronmotor oder ein Synchronmotor ist, dem steuerungsseitig ein Drehgeber (9) und zur Drehzahlregelung ein Frequenzumrichter (35) zugeordnet sind, und dass der Drehzahlregelung durch den Frequenzumrichter (36) zumindest zeitweise eine dann gegenüber der Drehzahlregelung vorrangige Druckregelung überlagerbar ist.

2. Spannsystem nach Anspruch 1, **dadurch gekennzeichnet, dass** Druck- und/oder Positionssensoren (17, 17') des Spannzylinders (1) vorgesehen, und, vorzugsweise, mit einer Steuerung (36, CU) verbunden sind.

3. Spannsystem nach Anspruch 1, **dadurch gekennzeichnet, dass** die Pumpe (8) eine Zahnradpumpe und, , über eine Vielzahnkupplung (31) mit einer Elektromotor-Antriebswelle (30) gekoppelt ist.

4. Spannsystem nach Anspruch 1, **dadurch gekennzeichnet, dass** der Drehgeber (32) auf eine Elektromotor-Antriebswelle (30) ausgerichtet und im Reservoirgehäuse (6) installiert ist.

5. Spannsystem nach Anspruch 3, **dadurch gekennzeichnet, dass** der Drehgeber (32) entweder direkt oder mit einer Kupplung (33) an die Elektromotor-Antriebswelle (30) angebaut oder in ein Sensorlager (33') der Elektromotor-Antriebswelle (30) eingegliedert ist.

6. Spannsystem nach Anspruch 1, **dadurch gekennzeichnet, dass** der Spannzylinder (1) volumenbezogen unterschiedliche Beaufschlagungsseiten aufweist, und dass in zumindest einer Verbindungsleitung, vorzugsweise in beiden Verbindungsleitungen (15, 16), zu den Beaufschlagungsseiten, ein zumindest förderdruckabhängig gegen Federkraft (23') umstellbares 3/2-Wegeventil (23) angeordnet und mit einer Rücklaufleitung (25) zum Reservoirgehäuse (6) verbunden ist.

7. Spannsystem nach Anspruch 6, **dadurch gekennzeichnet, dass** die 3/2-Wegeventile (23) in einem am Reservoirgehäuse (6) des Motorpumpenaggregats (5) installierten Anschlussblock (22) enthalten sind.

8. Spannsystem nach wenigstens einem der vorherigen Ansprüche, **dadurch gekennzeichnet, dass** zwischen jedem Förderauslass (13, 14) der in beiden Drehrichtungen fördernden Pumpe (8) und dem Reservoirgehäuse (6) des Motorpumpenaggregats (5) ein zur Pumpe (8) öffnendes Rückschlagventil (19), vorzugsweise ein federbelastetes Nachsaug-Rückschlagventil, angeordnet ist.

9. Spannsystem nach Anspruch 1, **dadurch gekennzeichnet, dass** der Spannzylinder (1) aus einer Lösestellung über einen Leergang in eine Spannstellung steuerbar ist, dass der Leergang mit Drehzahlregelung des Elektromotors (7) steuerbar ist, und dass zumindest in einem Übergang vom Leergang zur Spannstellung der Drehzahlregelung die Druckregelung bis zu einem vorwählbaren Maximaldruck, vorzugsweise einem pumpenseitig begrenzten Maximaldruck, überlagerbar ist.

## Claims

1. A clamping system (S) of a machine tool (W) having at least one clamping cylinder (1) that can directionally be controlled from an electrically-driven motor pump aggregate (5) that is connected to at least one admission side of the clamping cylinder and includes at least one pump (8) inside a reservoir housing (6) that is driven by an electric motor (7), **characterized in that** the clamping cylinder (1) can directionally be controlled without selector valves by changing the rotation direction of the electric motor (7), which is configured to be able to change the rotation direction, that is, via the pump (8) that delivers in both rotational directions, that the electric motor (7) is a three-phase asynchronous motor or a synchronous motor to which on the side of the controller a rotary position encoder (9) and a frequency converter (35) for speed control are assigned, and that then a pressure control that has priority over the speed control can at least temporarily be superimposed to the speed control by the frequency converter (36).

2. The clamping system according to claim 1, **characterized in that** pressure and/or position sensors (17, 17') of the clamping cylinder (1) are provided and preferably are connected to a controller (36, CU).

3. The clamping system according to claim 1, **characterized in that** the pump (8) is a gear pump and coupled to an electric motor drive shaft (30) via a multi-toothed clutch (31).

4. The clamping system according to claim 1, **characterized in that** the rotary position encoder (32) is oriented towards an electric motor drive shaft (30) and installed inside the reservoir housing (6).

5. The clamping system according to claim 3, **characterized in that** the rotary position encoder (32) is mounted to the electric motor drive shaft (30) directly or via a coupling (33) or integrated into a sensor bearing (33') of the electric motor drive shaft (30).

6. The clamping system according to claim 1, **characterized in that** the clamping cylinder (1) with respect to the volume has different admission sides and that in at least one connection pipe, preferably in both connection pipes (15, 16), toward the admission sides a 3/2 way valve (23) being adjustable at least depending on the delivery pressure against the spring force (23') is arranged and connected to a return pipe (25) to the reservoir housing (6).

7. The clamping system according to claim 6, **characterized in that** the 3/2 way valves (23) are contained in a connection block (22) that is installed inside the reservoir housing (6) of the motor pump aggregate (5).

8. The clamping system according to at least one of the preceding claims, **characterized in that** between each delivery outlet (13, 14) of the pump (8) delivering in both rotation directions and the reservoir housing (6) of the motor pump aggregate (5) a check valve (19) that opens toward the pump (8), preferably a spring-loaded servo-suction check valve is arranged.

9. The clamping system according to claim 1, **characterized in that** the clamping cylinder (1) can be controlled from a release position to a clamping position via an idle gear, that the idle gear can be controlled with the speed control of the electric motor (7), and that at least in a transition from the idle gear to the clamping position of the speed control the pressure control can be superimposed up to a pre-selectable maximum pressure, preferably a pump-side limited maximum pressure.

## Revendications

1. Système de serrage (S) d'une machine-outil (W), comprenant au moins un vérin de serrage (1) qui peut être commande en direction à partir d'une groupe motopompe électrique (5) qui est raccordée à au moins un côté d'application de pression du vérin de serrage et comprend dans le boîtier de réservoir au moins une pompe (8) entraînée par un moteur électrique, **caractérisé en ce que** le vérin de serrage (1) peut être commande en direction, sans valve de commande, par l'inversion du sens de rotation du moteur électrique qui est configuré à être réversible en rotation et par voie de la pompe (8) qui est apte à débiter dans les deux sens des rotation, **en ce que** le moteur électrique (7) est un moteur triphasé asynchrone ou synchrone auquel est associé, concernant l'asservissement, un capteur rotatif (9) et un convertisseur de fréquence (35) pour la régulation de vitesse, et **en ce que** la régulation de vitesse par le convertisseur de fréquence (36) peut au moins temporairement être superposé par une régulation de pression qui est alors prévalent sur la régulation de vitesse.

2. Système de serrage selon la revendication 1, **caractérisé en ce que** des capteurs de pression et/ou de position (17, 17') du vérin sont prévus qui, de préférence, sont raccordés à une unité de commande (36, CU).

3. Système de serrage selon la revendication 1, **caractérisé en ce que** la pompe (8) est une pompe à engrenages qui est couplée à un arbre d'entrainement (30) du moteur électrique par une accouplement à denture multi-dents (31).

4. Système de serrage selon la revendication 1, **caractérisé en ce que** le capteur rotatif (32) est orienté vers un arbre d'entrainement (30) du moteur électrique et installé dans le boîtier de réservoir (6).

5. Système de serrage selon la revendication 3, **caractérisé en ce que** le capteur rotatif (32) est, soit directement soit par voie d'une accouplement (33), joint à un arbre d'entrainement (30) du moteur électrique, ou le capteur est arrangé de façon intégrée, sous forme de palier à capteur intégré (33') de l'arbre d'entrainement (30) du moteur électrique.

6. Système de serrage selon la revendication 1, **caractérisé en ce que** les côtés d'application de pression du vérin de serrage (1) se diffèrent par rapport au volume, et **en ce que** dans au moins une conduite de raccordement, de préférence dans toutes les deux conduites de raccordement (15, 16), aux côtés d'application de pression est arrangé un distributeur 3/2 (23) qui est commutable contre l'action d'un ressort (23'), au moins en fonction de la pression délivrée, et raccordé au boîtier de réservoir (6) par une conduite de retour (25).

7. Système de serrage selon la revendication 6, **caractérisé en ce que** les distributeurs 3/2 (23) sont compris dans un bloc de raccordement (22) monté sur le boîtier de réservoir (6) de la groupe motopompe (5).

8. Système de serrage selon l'une au moins des revendications précédentes, **caractérisé en ce qu'**entre chaque sortie de refoulement (13, 14) de la pompe (8), qui est apte à débiter dans les deux sens de rotation, et le boîtier de réservoir (6) de la groupe motopompe (5) est arrangée un clapet antiretour (19) ouvrant vers la pompe (8), de préférence un clapet antiretour (19) à ressort destiné à l'aspiration.

9. Système de serrage selon la revendication 1, **caractérisé en ce que** le vérin de serrage (1) peut être commandé, à partir d'une position de desserrage et par voie d'une course à vide, dans une position de serrage, **en ce que** la course à vide peut être commandée par régulation de vitesse du moteur électrique (7), et **en ce qu'**il est, au moins en transition de la course à vide à la position de serrage, possible de superposer la régulation de pression à la régulation de vitesse, jusqu'à une pression maximale présélectionnée, de préférence une pression maximale qui est limitée du côté de la pompe.
